# EUROPEAN PATENT APPLICATION

(11) **EP 1 160 462 A1**
(43) Date of publication of application: **05.12.2001**
(21) Application number: 01111995.5
(22) Date of filing: 22.05.2001
(51) Int. Cl.: F16B 7/18

(54) **Coupling for tubular elements arranged at right angles**

(30) Priority: 30.05.2000 IT PD000039 U
(71) Applicant: Marchioro S.p.A. Stampaggio Materie Plastiche, 36030 Castelnovo Di Isola Vicentina (Vicenza) (IT)
(72) Inventor: Marchioro, Domenico, 36030 Castelnovo di Isola Vicentina (VI) (IT)
(74) Representative: Modiano, Guido, Dr.-Ing.

(57) **Abstract**

A coupling (10) for interconnecting tubular elements (15,16) arranged at right angles, comprising a plastics element (11) which is inserted axially with interference at an end of a first tubular element (15); a screw (17) being inserted transversely in a corresponding hole (18) provided in a second tubular element (16) and engaging axially the plastics element (11), so as to provide a T-shaped coupling between the first and second tubular elements (15,16).

## Description

The present invention relates to a coupling for tubular elements arranged at right angles.

Couplings of this type can be used for example to manufacture frames of cages, such as bird cages, or to create shelves and display racks.

One of the drawbacks of conventional couplings is that they have a rather complicated and costly structure in addition to not guaranteeing a quick assembly.

The aim of the present invention is to provide a coupling for interconnecting tubular elements which allows quick assembly.

Within this aim, an object of the present invention is to provide a coupling which has a simple structure.

Another object is to provide a low-cost coupling.

This aim and these and other objects which will become better apparent hereinafter are achieved by a coupling for interconnecting tubular elements arranged at right angles, characterized in that it comprises a plastics element which is inserted axially with interference at an end of a first tubular element, a screw being inserted transversely in corresponding holes provided in a second tubular element and engaging axially on the plastics element, so as to provide a T-shaped coupling between the first and second tubular elements.

Further characteristics and advantages of the invention will become better apparent from the description of a preferred but not exclusive embodiment thereof, illustrated only by way of non-limitative example in the accompanying drawings, wherein:

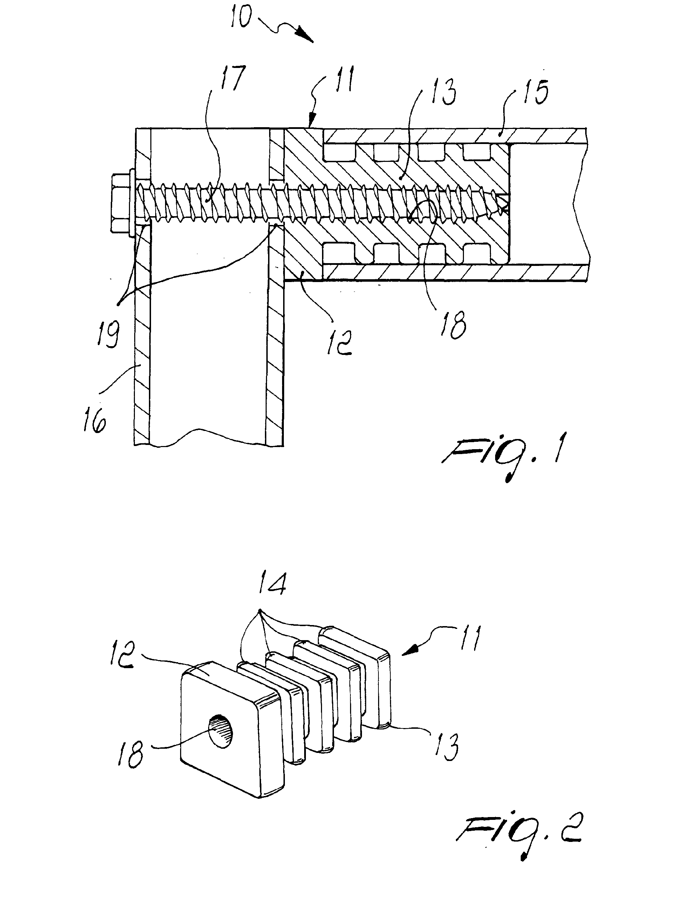

Figure 1 is a longitudinal partial sectional view of a coupling according to the invention, in an assembled condition;
Figure 2 is a perspective view of a component of the coupling according to the invention.

With reference to the figures, a coupling according to the invention is generally designated by the reference numeral 10.

The coupling comprises a longitudinally elongated plastics element 11 which has a substantially square plan shape, with head portions 12 and a body 13 provided with a plurality of spaced perimetric ridges 14.

Element 11 is inserted axially with interference, by way of the perimetric ridges 14, at an end of a first tubular element 15 also having a substantially square cross-section.

A second tubular element 16 is arranged at right angles to the first tubular element 15 and is fixed thereto by means of a screw 17 which passes transversely through the second tubular element 16 having a square cross-section and is then screwed into a corresponding internal cavity or hole 18 formed axially in element 11.

The screw 17 passes transversely through the second tubular element 16 by way of corresponding holes 19.

In assembly, the head portion 12 of element 11 is interposed between the two tubular elements 15 and 16.

In practice, it is evident that the present invention has achieved the intended aim and objects.

A coupling for interconnecting tubular elements has in fact been obtained by using simple components, of which one is coupled with interference on one of the two tubular elements and expands only partially upon insertion of a screw.

Advantageously, the tubular elements and the plastics element can optionally have a rectangular or circular cross-section.

All the details may further be replaced with other technically equivalent elements.

The materials and the dimensions, so long as they are compatible with the contingent use, may be any according to requirements.

The disclosures in Italian Utility Model Application No. PD2000U000039 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A coupling (10) for interconnecting tubular elements arranged at right angles, **characterized in that** it comprises a plastics element (11) which is inserted axially with interference at an end of a first tubular element (15), a screw (17) being inserted transversely in corresponding holes (19) provided in a second tubular element (16) and engaging axially said plastics element (11), so as to provide a T-shaped coupling between said first (15) and second (16) tubular elements.

2. The coupling according to claim 1, **characterized in that** said plastics element (11) is provided with a head portion (12) interposed between said first (15) and second (16) tubular elements and with a plurality of spaced perimetric ridges (14) which are adapted to couple with interference to an internal cavity (18) of said first tubular element (15).

3. The coupling according to claim 1, **characterized in that** said first (15) and second (16) tubular elements and said plastics element (11) have a square transverse cross-section.
